# EUROPÄISCHE PATENTSCHRIFT

(11) **EP 1 355 987 B1**
(45) Veröffentlichungstag und Bekanntmachung des Hinweises auf die Patenterteilung: **09.08.2006**
(21) Anmeldenummer: 02701253.3
(22) Anmeldetag: 14.01.2002
(51) Int. Cl.: C08L 69/00, C08K 3/34, C08K 7/00, C08K 5/523, C08K 13/04

(54) **FLAMMWIDRIGE; MINERALVERSTÄRKTE POLYCARBONATZUSAMMENSETZUNGEN MIT HOHER BINDENAHTFESTIGKEIT**
FLAME-RETARDANT POLYCARBONATE COMPOSITIONS, WHICH ARE REINFORCED WITH MINERALS AND HAVE A HIGH SEAM RESISTANCE
COMPOSITIONS POLYCARBONATES REFRACTAIRES RENFORCEES PAR MINERAUX PRESENTANT UNE RESISTANCE ELEVEE DE LIGNE DE LIAISON

(30) Priorität: 25.01.2001 DE 10103238
(43) Veröffentlichungstag der Anmeldung: 29.10.2003
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); PEUCKER, Uwe, 35091 Coelbe (DE); WITTMANN, Dieter, 51375 Leverkusen (DE)
(86) Internationale Anmeldenummer: PCT/EP2002/000259
(87) Internationale Veröffentlichungsnummer: WO 2002/059204

(56) Entgegenhaltungen:
- EP-A- 0 391 413
- EP-A- 0 754 531
- EP-A- 1 026 205
- EP-A- 1 038 920
- WO-A-98/51737
- US-A- 5 965 655
- US-B1- 6 174 943
- PATENT ABSTRACTS OF JAPAN vol. 2000, no. 05, 14. September 2000 (2000-09-14) & JP 2000 063654 A (OTSUKA CHEM CO LTD), 29. Februar 2000 (2000-02-29)

## Beschreibung

Die Erfindung betrifft flammwidrig ausgerüstete, mineralverstärkte Polycarbonat-Zusammensetzungen mit hohem E-Modul, guter Wärmeformbeständigkeit, ausgezeichnetem Verarbeitungsverhalten und mit verbesserter Bindenahtfestigkeit.

Aus der EP-A 0 391413 sind PC/ABS-Zusammensetzungen (Polycarbonat/Acrylnitrilbuta-dienstyrol) mit geringen linearen thermischen Ausdehnungsquotienten sowie hoher Schlagzähigkeit und Wärmeformbeständigkeit, die 4 bis 18 Gew.-% eines anorganischen Füllstoffs enthalten, dessen Partikel ein mittleres Durchmesser/Dicken-Verhältnis von 4 bis 24 besitzen, bekannt. Der anorganische Füllstoff ist ein plättchenförmiges Material wie Talk und Glimmer. Die beschriebenen Formmassen sind nicht flammwidrig ausgerüstet.

Die EP-A 0 754 531 beschreibt unter anderem PC/ABS-Zusammensetzungen, die mit einem vom Bisphenol-A abgeleiteten Oligophosphat flammwidrig ausgerüstet sind und plättchenförmige Verstärkungsstoffe enthalten. Die WO 00/46298 beschreibt mit Organophosphorverbindungen flammwidrig ausgerüstete PC/ABS-Blends, die 0,1 bis 5 Gew.-Teile Talk enthalten.

Formmassen mit plättchenförmigen Füllstoffen wie in den zuvor genannten Dokumenten beschrieben weisen in der Regel eine unzureichende Bindenahtfestigkeit auf.

Bekannt sind ferner PC/ABS-Formmassen mit faserförmigen mineralischen Füllstoffen. Die US-A 5 965 655 beschreibt Wollastonit enthaltende PC/ABS-Zusammensetzungen, die sich insbesondere durch verbesserte Oberflächencharakteristik, eine sogenannte Class A surface, auszeichnen. Die bevorzugt eingesetzten Wollastonite weisen ein mittleres Aspekt-Verhältnis, d.h. ein Verhältnis aus Faserlänge zu Faserdurchmesser von bis zu 6 auf. Formmassen mit derartigen Wollastoniten weisen in der Regel eine unzureichende Steifigkeit, d.h. ein zu geringes Zug-Biegemodul auf. Die beschriebenen Formmassen sind nicht flammwidrig ausgerüstet.

Auch die PC/ABS-Formmassen der WO 98/51737, die sich durch eine verbesserte Wärmeformbeständigkeit, Fließfähigkeit, Tieftemperaturzähigkeit und Dimensionsstabilität auszeichnet, sind nicht flammwidrig ausgerüstet. Die zugrunde liegenden Zusammensetzungen enthalten 1 bis 15 Gew.-Teile eines mineralischen Füllstoffs wie Talk oder Wollastonit mit einer mittleren größten Partikelabmessung von 0,1 bis 30 µm. Bei faserförmigen Füllstoffen wie Wollastoniten mit großem Aspekt-verhältnis wird diese Grenze in der Regel überschritten. Nicht flammwidrig ausgerüstet sind auch die Formmassen der EP-A 1 038 920 enthaltend ein spezielles Schmelzepolycarbonat, ABS und 5 bis 200 Gew.-Teile eines verstärkenden Füllstoffs.

In der EP-A 1 026 205 werden flammwidrige PC/ABS-Zusammensetzungen mit geringem Chlorgehalt beschrieben, die 0,1 bis 30 Gew.-Teile eines Silikatfüllstoffs enthalten und die sich insbesondere durch eine hervorragende Hydrolysebeständigkeit auszeichnen. Als Füllstoff kommen Talk und Glimmer, aber auch Wollastonite zum Einsatz. Die beschriebenen Formmassen weisen eine unzureichende Flammwidrigkeit, Wärmeformbeständigkeit, ein zu schlechtes ESC-Verhalten auf und können beim Spritzguß, bedingt durch Ausbluten des Flammschutzadditivs, sogenanntes Juicing, unerwünschte Werkzeugbeläge verursachen. Dies gilt ebenso für die in der JP-A 11/199768 beschriebenen PC/ABS-Formmassen, die nur 0,5 bis 5 Gew.-% eines anorganischen Füllstoffs enthalten und deshalb zudem eine für viele Anwendungen mangelhafte Steifigkeit besitzen.

Die der Erfindung zugrunde liegende Aufgabe besteht darin, mineralverstärkte flammwidrige Polycarbonat-Zusammensetzungen bereitzustellen, die sich bei exzellenter Flammwidrigkeit, insbesondere auch bei dünnen Wandstärken, hoher Steifigkeit, Wärmeformbeständigkeit und Zähigkeit, durch ein ausgezeichnetes Verarbeitungsverhalten, d.h. durch gute Fließfähigkeit und äußerst geringe Neigung zur Belagsbildung auf den Werkzeugoberflächen in der Spritzgußverarbeitung, durch hervorragendes ESC(Environmental Stress Cracking)-Verhalten sowie insbesondere durch eine deutlich verbesserte Bindenahtfestigkeit auszeichnen. Derartige Formmassen können zur Herstellung von Formteilen jeglicher Art, insbesondere von dünnwandigen Teilen, an die erhöhte Ansprüche an mechanische Eigenschaften und den Flammschutz gestellt sind, verwendet werden.

Gelöst wird diese Aufgabe durch schlagzähmodifizierte, flammwidrig ausgerüstete und mineralverstärkte Polycarbonat-Zusammensetzungen gemäss Anspruch 1 mit einer Bindenahtfestigkeit von > 6 kJ/m², gemessen nach ISO 179/leU. Gegenstand der Erfindung sind ferner diese Polycarbonat-Zusammensetzung enthaltende Formkörper. In einer bevorzugten Ausführungsform weisen die erfindungsgemäßen Polycarbonat-Zusammensetzungen ein hohes Elastizitätsmodul von ≥ 3,5 GPa auf.

Besonders bevorzugt erreichen die erfindungsgemäßen Zusammensetzungen im Flammwidrigkeitstest gemäß UL94-V die Bewertung V-0 bei Wandstärken ≤1,5 mm, bevorzugt bei ≤ 1,2 mm, insbesondere bei ≤1,0 mm.

Als verstärkendes Mineral enthalten die erfindungsgemäßen Zusammensetzungen einen Wollastonit mit einem mittleren Aspektverhältnis von > 10, besonders bevorzugt > 15. Das sogenannte Aspektverhältnis bezeichnet das Verhältnis aus größter und kleinster Partikelabmessung eines Teilchens. Bei faserförmigen Partikeln wie Wollastonit ist dies das Verhältnis aus deren mittleren Länge und mittlerem Durchmesser. Die erfindungsgemäß einzusetzenden Wollastonite weisen mittlere Faserdurchmesser von kleiner 15µm, vorzugsweise ≤ 10µm. Der erfindungsgemäß zu verwendende Wollastonit wird in den Polycarbonat-Zusammensetzungen in einer Menge von 1 bis 30 Gew.-Teile, vorzugsweise 5 bis 20 Gew.-Teile und besonders bevorzugt 8 bis 15 Gew.-Teile eingesetzt.

Wollastonit ist ein Calciumsilikat der idealen Summenformel Ca₃[Si₃O₉] und bildet meist derbe, strahlige, stengelige, blättrige oder feinfaserige Massen, selten auch tafelige bis nadelige Kristalle. Die verschiedensten Typen sind im Handel erhältlich. Dies gilt auch für den erfindungsgemäß zu verwendenden Wollastonit.

Überraschend wurde festgestellt, daßWollastonit mit dem angegebenen Aspektverhältnis enthaltende Polycarbonatzusammensetzungen die gewünschten Eigenschaften aufweisen und insbesondere eine hohe Bindenahtfestigkeit und ein hohes Elastitzitätsmodul besitzen. Dies ist deshalb überraschend, weil Talk mit entsprechendem Aspektverhältnis als ebenfalls silikatischer Verstärkungsstoff die Bindenahtfestigkeit von PC/ABS-Formmassen deutlich herabsetzt.

Das erfindungsgemäß gewünschte Eigenschaftsbild wird durch eine Polycarbonat-Zusammensetzung gemäss Anspruch 1 erreicht die neben dem ausgewählten Wollastonit die folgenden Komponenten erithält:
A) Ein aromatisches Polycarbonat und/oder Polyestercarbonat,
B) einen Schlagzähmodifikator,
C) gegebenenfalls ein thermoplastisches Homo- und/oder Copoylmer und
D) eine Phosphorverbindung,
E) gegebenenfalls ein fluoriertes Polyolefin und
darüber hinaus weitere Additive enthalten kann.

Die erfindungsgemäß geeigneten Komponenten der schlagzähmodifizierten, flammwidrigen mineralverstärkten Polycarbonat-Zusammensetzungen werden anschließend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 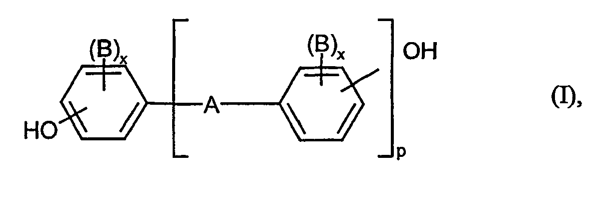 wobei
- A: eine Einfachbindung, C₁ bis C₅-Alkylen, C₂ bis C₅-Alkyliden, C₅ bis C₆ Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 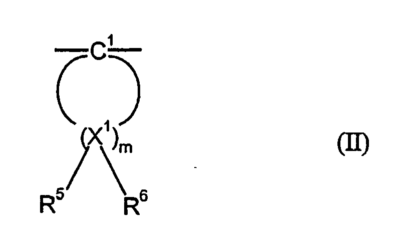 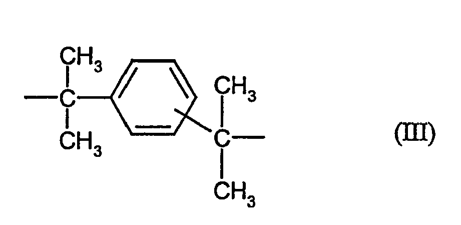
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydrohyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoüatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10.000 bis 200.000, vorzugsweise 15.000 bis 80.000.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenyhnethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten, peliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyester-carbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

Die Komponente A ist in den erfindungsgemäßen Zusammensetzungen in einer Menge von 5 bis 95 Gew.-Teile, bevorzugt 10 bis 90 Gew.-Teile und in am meisten bevorzugter Weise 50 bis 85 Gew.-Teile enthalten.

### Komponente B

Die Komponente B umfasst ein oder mehrere Pfropfpolymerisate von
B.1 5 bis 95, vorzugsweise 30 bis 90 Gew.%, wenigstens eines Vinylmonomeren auf
B.2 95 bis 5, vorzugsweise 70 bis 10 Gew.% einer oder mehrerer Pfropfgrundlagen mit Glasübergangstemperaturen < 10°C, vorzugsweise < 0°C, besonders bevorzugt < -20°C.

Die Pfropfgrundlage B.2 hat eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind Gemische aus
B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, tert.-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z.B. auf Basis Butadien, Isopren) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt. Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.%, vorzugsweise mindestens 40 Gew.% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initüerung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfinonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vemetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen wie Di- und Trivinylbenzole, aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vemetzten Monomere beträgt vorzugsweise 0,02 bis 5, insbesondere 0,05 bis 2 Gew.%, bezogen auf die Pfropfgrundlage B.2.

Bei cyclischen vernetzenden Monomeren mit mindestens drei ethylenisch ungesättigten Gruppen ist es vorteilhaft, die Menge auf unter 1 Gew.% der Pfropfgrundlage B.2 zu beschränken.

Bevorzugte "andere" polymerisierbare, ethylenisch ungesättigte Monomere, die neben den Acrylsäureestem gegebenenfalls zur Herstellung der Pfropfgrundlage B.2 dienen können, sind z. B. Acrylnitril, Styrol, α-Methylstyrol, Acrylamide, Vinyl-C₁₋C₆-alkylether, Methylmethacrylat, Butadien. Bevorzugte Acrylatkautschuke als Pfropfgnmdlage B.2 sind Emulsionspolymerisate, die einen Gelgehalt von mindestens 60 Gew.% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann in den erfindungsgemäßen Zusammensetzungen in einer Menge von 0,5 bis 60 Gew.-Teile, bevorzugt 1 bis 40 Gew.-Teile und in am meisten bevorzugter Weise 2 bis 30 Gew.-Teile enthalten.

### Komponente C

Die Komponente C umfaßt ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-(C₁ bis C₈)-Akylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alkylester wie Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, tert.-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.%, vorzugsweise mindestens 90 Gew.%, bezogen auf die Dicarbonsäurekomponente Terephthalsäurereste und mindestens 80 Gew.%, vorzugsweise mindestens 90 Mol%, bezogen auf die Diolkomponente Ethylenglykol- und/oder Butandiol-1,4-Reste.

Die bevorzugten Polyalkylenterephthalate können neben Terephthalsäureresten bis zu 20 Mol%, vorzugsweise bis zu 10 Mol%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 Mol%, vorzugsweise bis zu 10 Mol%, andere aliphatische Diole mit 3 bis 12 C-Atomen oder cycloaliphatische Diole mit 6 bis 21 C-Atomen enthalten, z. B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen drei- oder vierwertiger Alkohole oder 3- oder 4-basischer Carbonsäuren, z. B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z. B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.%, vorzugsweise 1 bis 30 Gew.%, Polyethylenterephthalat und 50 bis 99 Gew.%, vorzugsweise 70 bis 99 Gew.%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (z.B. Kunststoff-Handbuch, Band VIII, S. 695 ff., Carl-Hanser-Verlag, München 1973).

Die Komponente C ist in den erfindungsgemäßen Zusammensetzungen in einer Menge von 0 bis 50 Gew.-Teile, bevorzugt bis 30 Gew.-Teile und in am meisten bevorzugter Weise bis zu 20 Gew.-Teile enthalten.

### Komponente D

Die Zusammensetzungen sind durch Zusatz phosphorhaltiger Verbindungen geringer Flüchtigkeit flammwidrig ausgerüstet.

Die Zusammensetzungen phosphorhaltige Flammschutzmittel aus den Gruppen der oligomeren Phosphor- und Phosphonsäureester.

Bei der Komponente D handelt es sich um Phosphorverbindungen der allgemeinen Formel (IV) 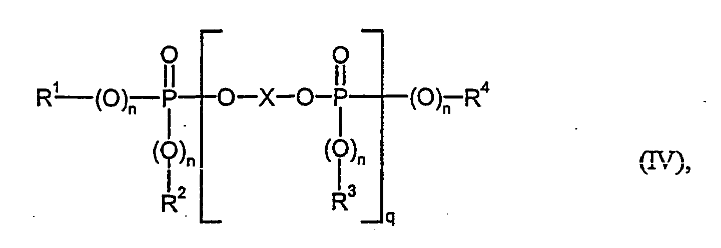 worin
- R¹, R², R³ und R⁴,: unabhängig voneinander jeweils C₁ bis C₈-Alkyl, gegebenenfalls durch Alkyl substituiertes C₅ bis C₆₋Cycloalkyl, C₆ bis C₁₀-Aryl oder C₇ bis C₁₂-Aralkyl,
- n: unabhängig voneinander, 0 oder 1, vorzugsweise 1,
- q: eine Zahl von 0,5 bis 30, bevorzugt von 0,7 bis 15, insbesondere von 0,9 bis 5 und

Bei Einsatz von Mischungen verschiedener Komponenten der Formel (IV) nimmt q einen zahlengemittelten Wert an und stellt daher einen Durchschnittswert dar.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) steht für einen Rest der Formel 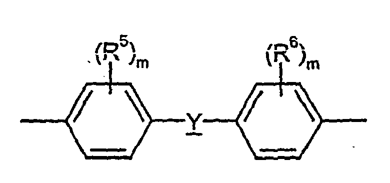 worin
- R⁵ und R⁶: unabhängig voneinander gegebenfalls hallogen substituiertes C₁-C₄-Alkyl, vorzugsweise Methyl, oder Halogen, vorzugsweise Chlor oder Brom,
- m: unabhängig voneinander 0, 1, 2, 3 oder 4
- Y: für C₁ bis C₇-Alkyliden, C₁ bis C₇-Alkylen, C₅ bis C₁₂-Cycloalkylen, C₅ bis C₁₂-Cycloalkyliden, -O-, -S-, -SO-, -SO₂- oder -CO- steht.
- X: steht besonders bevorzugt für 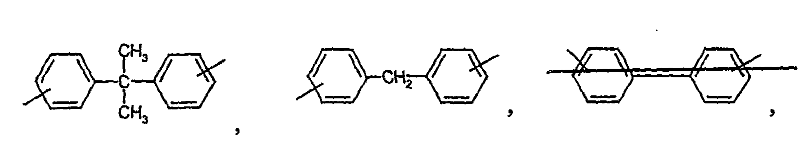 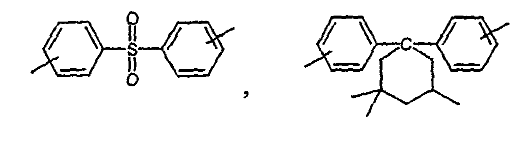 oder deren chlorierte oder bromierte Derivate. Besonders bevorzugt leitet sich X von Bisphenol A ab.

Der Einsatz von oligomeren Phosphorsäureestern, die sich vom Bisphenol A oder dazu analogen Verbindungen ableiten, ist besonders vorteilhaft, da die mit diesen Phosphorverbindungen ausgerüsteten Zusammensetzungen eine besonders hohe Spannungsrissbeständigkeit sowie eine besonders geringe Neigung zur Werkzeugsbelagsbildung bei der Spritzgussverarbeitung aufweisen. Des weiteren läßt sich mit diesen Flammschutzmitteln eine besonders hohe Wärmeformbeständigkeit erzielen.

Die Phosphorverbindungen gemäß Komponente D, Formel (IV) sind bekannt (vgl. z. B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography HPLC), Gelpermeations-chromatographie GPC) die Zusammensetzung der Phosphat-Mischung (Molekulargewichts-verteilung) bestimmt wird und daraus die Mittelwerte für q berechnet werden.

Optionale Flammschtzmittel sind Phosphonatamine u. Phosphazene.

Phosphonatamine sind vorzugsweise Verbindungen der Formel (V)

A_{3-y}-NB¹_{y} (V)

in welcher
A für einen Rest der Formel (Va) 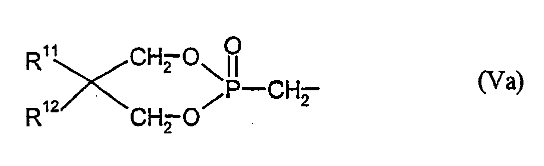 oder (Vb) 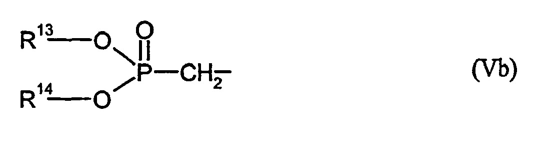 steht,
- R¹¹ und R¹²: unabhängig voneinander für unsubstituiertes oder substituiertes C₁ bis C₁₀-Alkyl oder für unsubstituiertes oder substituiertes C₆ bis C₁₀-Aryl, stehen,
- R¹³ und R¹⁴: unabhängig voneinander für unsubstituiertes oder substituiertes C₁ bis C₁₀-Alkyl oder unsubstituiertes oder substituiertes C₆ bis C₁₀-Aryl stehen oder
- R¹³ und R¹⁴: zusammen für unsubstituiertes oder substituiertes C₃ bis C₁₀-Alkylen stehen,
- y: die Zahlenwerte 0, 1 oder 2 bedeuten und
- B¹: unabhängig für Wasserstoff, gegebenenfalls halogeniertes C₂ bis C₈-Alkyl, unsubstituiertes oder substituiertes C₆ bis C₁₀-Aryl steht.
- B¹: steht vorzugsweise unabhängig für Wasserstoff, für Ethyl, n- oder iso-Propyl, welche durch Halogen substituiert sein können, unsubstituiertes oder durch C₁ bis C₄-Alkyl und/oder Halogen substituiertes C₆ bis C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec.-oder tert.-Butyl, Pentyl oder Hexyl.

Substituiertes Alkyl in R¹¹, R¹², R¹³ und R¹⁴ steht unabhängig vorzugsweise für durch Halogen substituiertes C₁ bis C₁₀-Alkyl, insbesondere für ein- oder zweifach substituiertes Methyl, Ethyl, n-Propyl, iso-Propyl, n-, iso-, sek.- oder tert.-Butyl, Pentyl oder Hexyl.

C₆ bis C₁₀-Aryl steht in R¹¹, R¹², R¹³ und R¹⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R¹³ und R¹⁴ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2"-trioxid der Formel (Va-1) 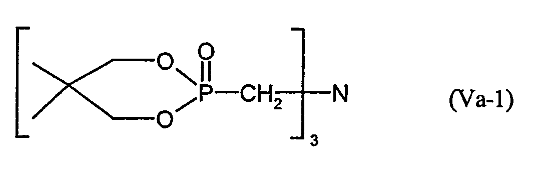 (Versuchsprodukt XPM 1000, Solutia Inc., St. Louis, USA) 1,3,2-Dioxaphos-phorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,5-dimethyl-1,3,2-dioxaphosphorinan-2-yl)methyl]-5,5-dimethyl-N-phenyl-, P,2-dioxid; 1,3,2-Dioxaphospho- rinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

### Bevorzugt sind weiterhin:

Verbindungen der Formel (Va-2) oder (Va-3) 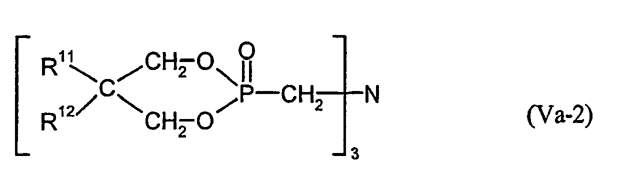 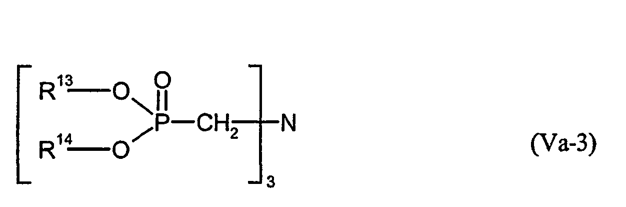 wobei R¹¹, R¹², R¹³ und R¹⁴ die oben angegebenen Bedeutungen haben. Besonders bevorzugt sind Verbindungen der Formel (Va-2) und (Va-1).

Die Herstellung der Phosphonatamine ist beispielsweise in der US-A 5 844 028 beschrieben.

Phosphazene sind Verbindungen der Formeln (VIa) und (VIb). 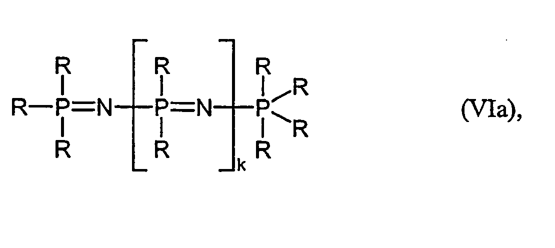 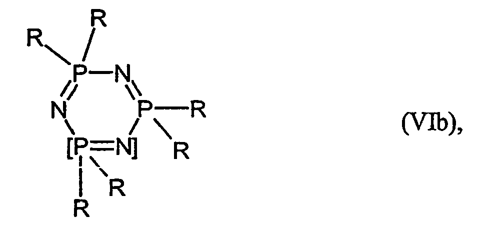 worin
- R: jeweils gleich oder verschieden ist und für Amino, jeweils gegebenenfalls halogeniertes, vorzugsweise mit Fluor halogeniertes C₁ bis C₈-Allcyl, oder C₁ bis C₈ Alkoxy, jeweils gegebenenfalls durch Alkyl, vorzugsweise C₁ bis C₄ Alkyl, und/oder Halogen, vorzugsweise Chlor und/oder Brom, substituiertes C₅ bis C₆-Cycloalkyl, C₆ bis C₂₀-Aryl, vorzugsweise Phenyl oder Naphthyl, C₆ bis C₂₀-Aryloxy, vorzugsweise Phenoxy, Naphthyloxy, oder C₇ bis C₁₂₋Aralkyl, vorzugsweise Phenyl-C₁-C₄-alkyl, steht,
- k: für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Besonders bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein. Phosphazene und deren Herstellung sind beispielsweise in EP-A 0 728 811, DE-A 1961668 und WO 97/40092 beschrieben.

Die Flammschutzmittel können allein oder in beliebiger Mischung untereinander oder in Mischung mit anderen Flammschutzmitteln und/oder Flammschutzsynergisten eingesetzt werden.

Die Komponente D ist in der erfindungsgemäßen Zusammensetzung in einer Menge von 0,5 bis 30 Gew.-Teile, bevorzugt 1 bis 25 Gew.-Teile und in am meisten bevorzugter Weise 2 bis 20 Gew.-Teile enthalten.

### Komponente E

Das erfindungsgemäße Flammschutzmittel gemäß Komponente D kann vorzugsweise in Kombination mit sogenannten Antidrippingmitteln verwendet werden, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Bevorzugt werden in den erfindungsgemäßen Zusammensetzungen fluorierte Polyolefine als Antidrippingmittel eingesetzt.

Fluorierte Polyolefine sind bekannt und beispielsweise in der EP-A 0 640 655 beschrieben. Sie werden unter der Marke Teflon® 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetem, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.%, vorzugsweise 7 bis 60 Gew.%. In den erfindungsgemäßen Zusammensetzungen können fluorierte Polyolefine in Mengen von 0 bis 5 Gew.-Teilen, vorzugsweise bis 2 Gew.-Teilen und besonders bevorzugt 0,1 bis 0,5 Gew.-Teilen enthalten sein.

### F. Weitere Zusätze

Die erfindungsgemäßen Formmassen können weiterhin bis zu 30 Gew.-Teile wenigstens eines der üblichen Additive, wie Gleit- und Entformungsmittel, beispielsweise Pentaerythrittetrastearat, Nukleiermittel, Antistatika, Stabilisatoren, Füll- und Verstärkungsstoffe wie Glas- oder Carbonfasern, Glimmer, Kaolin, CaCO₃ und Glasschuppen sowie Farbstoffe und Pigmente enthalten.

Die erfindungsgemäßen Formmassen (Zusammensetzungen) können bis zu 30 Gew.-Teile eines weiteren, gegebenenfalls synergistisch wirkenden Flammschutzmittels enthalten.

Beispielhaft werden als weitere Flammschutzmittel andere phosphorhaltige Verbindungen wie monomere Organophosphate, z. B. Triphenylphosphat oder organische Halogenverbindungen wie Decabrombisphenylether oder Tetrabrombisphenol A, anorganische Halogenverbindungen wie Ammoniumbromid, Stickstoffverbindungen, wie Melamin, Melaminformaldehyd-Harze, anorganische Hydroxidverbindungen wie Mg- oder Al-Hydroxid, anorganische Verbindungen wie Antimonoxide, Bariummetaborat, Hydroxoantimonat, Zirkonoxid, Zirkonhydroxid, Molybdänoxid, Ammoniummolybdat, Zinkborat, Ammoniumborat, Bariummetaborat, Siliciumoxid oder Zinnoxid sowie Siloxanverbindungen genannt.

Bevorzugt kommen als Flammschutz(FR)-Synergist die in der US 5 849 827 beschriebenen feinstteiligen (nanoskaligen) anorganischen Pulver wie TiN, TiO₂, SiO₂ SnO₂ WC, ZnO, Böhmit, ZrO₂ und Al₂O₃ zum Einsatz. Diese Teilchen besitzen eine mittlere Primärpartikelgröße von 0,1 bis 1.000 nm, vorzugsweise 1 bis 500 nm, besonders bevorzugt 1 bis 100 nm. Besonders bevorzugt ist Böhmit.

Die Summe der Gewichtsteile aller Komponenten ergibt 100.

### Herstellung der Formmassen und Formkörper

Die erfindungsgemäßen Formmassen (Zusammensetzungen) werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formkörpern jeder Art verwendet werden. Diese können durch Spritzguß, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise auch zur Herstellung von folgenden Formkörpern oder Formteilen verwendet werden:

Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafiir, Spielfahrzeuge für Kinder, Flächige Wandelemente, Gehäuse für Sicherheitseinrichtungen, Wärmeisolierte Transportbehältnisse, Formteile für Sanitär- und Badausrüstungen, Abdeckgitter für Lüfteröffnungen, Gehäuse für Gartengeräte.

Die folgenden Beispiele dienen der weiteren Erläuterung der Erfindung.

### Beispiele

Die in Tabelle 1 angegebenen und nachfolgend kurz erläuterten Komponenten werden auf einer ZSK-25 bei 240°C compoundiert. Die Formkörper werden auf einer Spritzgießmaschine Typ Arburg 270 E bei 240° hergestellt.

### Komponente A

Lineares Polycarbonat auf Basis Bisphenol A mit einer relativen Lösungsviskosität von 1,24, gemessen in CH₂Cl₂ als Lösungsmittel bei 25°C und einer Konzentration von 0,5 g/100 ml.

### Komponente B

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d₅₀ = 0,3 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

### Bisphenol-A-basierendes Oligophosphat

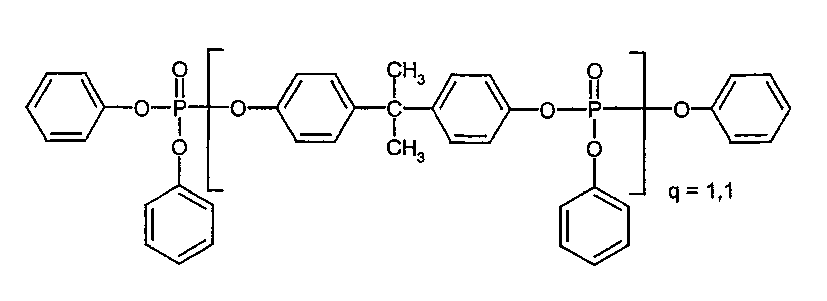

### Komponente E

Tetrafluorethylenpolymerisat als koagulierte Mischung aus einer SAN-Pfropf polymerisat-Emulsion gemäß oben genannter Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.% zu 10 Gew.%. Die Tetrafluorethylenpolymerisat-Emulsion besitzt einen Feststoffgehalt von 60 Gew.%, der mittlere Teilchendurchmesser liegt zwischen 0,05 und 0,5 µm. Die SAN-Pfropfpolymerisat-Emulsion besitzt einen Feststoffgehalt von 34 Gew.% und einen mittleren Latexteilchendurchmesser von d₅₀ = 0,3 µm.

Die Emulsion des Tetrafluorethylenpolymerisats (Teflon® 30 N) wird mit der Emulsion des SAN-Pfropfpolymerisats B vermischt und mit 1,8 Gew.%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente F. 1

### Pentaerythrittetrastearat (PETS) als Entformungsmittel

### Komponente F.2

### Phosphitstabilisator

### Komponente G.1

Talk: Naintsch® A3 (Naintsch Mineralwerke GmbH, Graz, Österreich) mit einem mittleren Partikeldurchmesser von 1,2 µm.

### Komponente G.2

Wollastonit: Nyglos® 5 mit einem Längen/Dicken-Verhältnis von 13/1 und einem mittleren Faserdurchmesser D₅₀ von 6,5 µm.

### Komponente G.3

Wollastonit: Nyglos® 8-10013, oberflächenbehandelter Wollastonit mit einem Längen/Dicken-Verhältnis von 19/1 und einem mittleren Faserdurchmesser D₅₀ von 9,9µm.

### Prüfung der erfindungsgemäßen Formmassen

Die Bestimmung der Wärmeformbeständigkeit nach Vicat B erfolgt gemäß DIN 53 460 (ISO 306) an Stäben der Abmessung 80 mm x 10 mm x 4 mm.

Die Bestimmung der Kerbschlagzähigkeit aₖ wird gemäß ISO 180/1 A durchgeführt. Die Ermittlung der Schlagzähigkeit an (ohne Kerbe) erfolgt gemäß ISO 180/1 U.

Das Elastizitätsmodul E wird im Zugversuch gemäß ISO 527 ermittelt.

Zur Ermittlung der Bindenahtfestigkeit gemäß ISO 179/1eU wird die Schlagzähigkeit an der Bindenaht von beidseitig ausgespritzten Prüfkörpern (Verarbeitungstemperatur 260°C) der Dimension 170 mm x 10 mm x 4 mm gemessen.

Das Brandverhalten der Proben wird nach UL 94 V an Stäben der Dicken 1,2 mm und 1,0 mm gemessen.

Das Spannungsrißverhalten (ESC-Verhalten) wird an Stäben der Abmessung 80 mm x 10 mm x 4 mm untersucht. Als Testmedium wird eine Mischung aus 60 Vol.% Toluol und 40 Vol.% Isopropanol verwendet. Die Probekörper werden mittels einer Kreisbogenschablone vorgedehnt (Vordehnung in Prozent) und bei Raumtemperatur im Testmedium gelagert. Das Spannungsrißverhalten wird über die Rißbildung bzw. den Bruch in Abhängigkeit von der Vordehnung (εx) im Testmedium beurteilt.

Der MVR (Melt Volume Rate) wird gemäß ISO 1133 bei 240°C unter Verwendung einer Stempellast von 5 kg bestimmt.

Eine Zusammenstellung der Eigenschaften der erfindungsgemäßen Zusammensetzung oder der daraus erhaltenen Formkörper ist in der Tabelle 1 wiedergegeben.

**Tabelle: Formmassen und ihre Eigenschaften**

| | | V1 (Vergleich) | V2 (Vergleich) | 1 | 2 |
|---|---|---|---|---|---|
| **Komponenten [Gew.-Teile]** | | | | | |
| A | (Polycarbonat) | 65,3 | 63,2 | 63,2 | 63,2 |
| B | (Pfropfpolymerisat) | 7,0 | 4,9 | 4,9 | 4,9 |
| C | (Styrolacrylnitrilcopolymer) | 6,0 | 4,9 | 4,9 | 4,9 |
| D | (Flammschutzmittel) | 14,6 | 12,8 | 12,8 | 12,8 |
| E | (Teflon-Masterbatch) | 4,6 | 3,9 | 3,9 | 3,9 |
| F1 | (Entformungsmittel) | 0,4 | 0,4 | 0,4 | 0,4 |
| F2 | (Stabilisator) | 0,1 | 0,1 | 0,1 | 0,1 |
| G1 | (Talk) | 2,0 | 9,8 | - | - |
| G2 | (Wollastonit) | - | - | 9,8 | - |
| G3 | (Wollastonit) | - | - | - | 9,8 |

| Eigenschaften | | | | | |
|---|---|---|---|---|---|
| aₙ (Bindenahtfestigkeit) [kJ/m²] | | 6,9 | 4,0 | 8,5 | 7,5 |
| aₙ [kJ/m²] | | kein Bruch | 125 | 131 | 133 |
| aₖ[kJ/m²] | | 17 | 10 | 10 | 10 |
| Vicat B 120 [°C] | | 95 | 99 | 99 | 99 |
| MVR(240°C/5kg) [ml/10min] | | 18,6 | 15,3 | 21,3 | 22,1 |
| ESC-Verhalten, Bruch bei εx [%] | | 2,4 | 2,4 | 2,4 | 2,4 |
| UL 94 V bei 1,2 mm | | V-O | V-O | V-O | V-O |
| (Nachbrennzeit [s]) | | (21) | (15) | (6) | (16) |
| UL 94 V bei 1,0 mm, | | V-O | V-O | V-O | V-O |
| (Nachbrennzeit [s]) | | (40) | (16) | (10) | (19) |
| Elastizitätsmodul E [GPa] | | 2,8 | 3,9 | 3,6 | 3,6 |

Die Ergebnisse in der Tabelle zeigen, daß durch den Einsatz des Wollastonits mit dem ausgewählten Aspektverhältnis sowohl ein ausgezeichnetes Elastizitätsmodul als auch eine hervorragende Bindenahtfestigkeit in Kombination mit guter Zähigkeit, Fließfähigkeit, Flammwidrigkeit und ESC-Beständigkeit erreicht werden kann. Diese Kombination von Eigenschaften wird durch den Einsatz von Talk nicht erreicht.

## Patentansprüche

1. Schlagzähmodifizierte, flammwidrig ausgerüstete thermoplastische Formmassen enthaltend
A) 5 bis 95 Gewichtsteile (Gew.-Tle.) eines aromatischen Polycarbonats oder eines aromatischen Polyestercarbonats oder eines Gemischs aus aromatischem Polycarbonat und aromatischem Polyestercarbonat,
B) 0,5 bis 60 Gew.-Tle. eines Schlagzähmodifikators, wobei der Schlagzähmodifikator ein oder mehrere Pfropfpolymerisate umfasst von
B.1 5 bis 95 wenigstens eines Vinylmonomeren enthaltend
B.1.1 50 bis 99 Gew.-Teile Vinylaromaten und/oder kernsubstituierten Vinylaromaten und/oder Methacrytsäure-(C₁-C₈)-Alkylester und
B.1.2 1 bis 50 Gew.-Teile Vinylcyanide und/oder (Meth)Acrylsäure-(C₁-C₈)-Alkylester und/oder Anhydride ungesättigter Carbonsäuren und/oder Imide ungesättigter Carbonsäuren, auf
B.2 95 bis 5 einer oder mehrerer Pfropfgrundlagen mit Glasübergangstemperaturen kleiner als 10°C, einer mittlere Teilchengröße (d₅₀-Wert) von 0,05 bis 10 µm, und einem Gelanteil der Pfropfgrundlage B.2 von mindestens 30 Gew.-%,
C) 0 bis 50 Gew.-Tle. eines oder mehrerer thermoplastischen Vinyl(Co)Polymerisate und/oder Polyalkylenterephthalate,
D) 0,5 bis 30 Gew.-Tle. einer phosphorhaltigen Verbindung der allgemeinen Formel 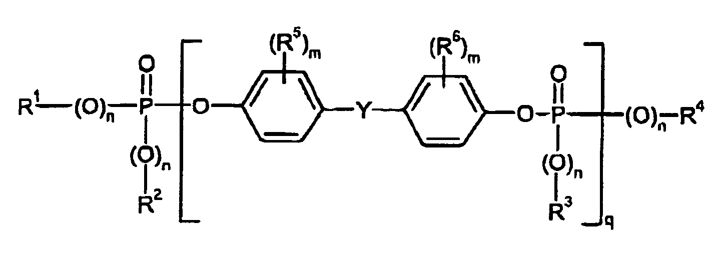 worin
R¹, R², R³ und R⁴ jeweils unabhängig voneinander C₁ bis C₈-Alkyl und/oder gegebenenfalls durch Alkyl substituiertes C₅ bis C₆-Cycloalkyl, C₆ bis C₁₀-Aryl oder C₇ bis C₁₂-Aralkyl,
n unabhängig voneinander 0 oder 1,
m unabhängig voneinander 0, 1, 2, 3 oder 4.
q eine Zahl zwischen 0,5 und 30,
R⁵ und R⁸ unabhängig voneinander gegebenenfalls halogensubstituiertes C₁ bis C₄-Alkyl oder Halogen und
Y C₁ bis C₇-Alkyliden, C₁ bis C₇-Alkylen, C₅ bis C₁₂-Cycloalkylen. C₅ bis C₁₂-Cycloalkyliden, -0-. -S-, -SO-, SO₂ oder -CO- bedeuten,
E) 0 bis 5 Gew.-Tle. fluoriertes Polyolefin.
F) 1 bis 30 Gew.-Tle Wollastonit mit einem mittleren Aspektverhältnis von größer als 10 und mit einem mittleren Faserdurchmesser von kleiner als 15 µm,
G) 0 bis 30 Gew.% mindestens eines Polymoradditivs aus der Gruppe der Gleit- und Entformungsmittel, Nukleiermittel, Antistatika, Stabilisatoren, Glas- oder Carbonfasem, Füllstoffe, Farbstoffe und/oder Pigmente,
wobei die Summe der Gewichtsteile der Formmasse 100 ergibt und die resultierende Formmasse eine Bindenahtfestigkeit von größer als 6 kJ/m², gemessen nach ISO 179/1eU, aufweist

2. Polycarbonat-Zusammensetzung nach Anspruch 1 mit einem Elastizitätsmodul von mindestens 3.5 GPa.

3. Polycarbonat-Zusammensetzung nach Anspruch 1 oder 2, die den Flammwidrigkeitstest nach UL94V mit der Bewertung V-0 bei Wandstärken ≤ 1,5 mm besteht

4. Polycarbonat-Zusammensetzung nach Anspruch 1, worin der Wollastonit einen mittleren Faserdurchmesser kleiner 10 µm aufweist.

5. Polycarbonat-Zusammensetzung nach Anspruch 1, worin das Polycarbonat oder das Polyestercarbonat in einer Menge von 50 bis 85 Gew.%, bezogen auf die Masse der Zusammensetzung, enthalten ist

6. Polycarbonat-Zusammensetzung nach Anspruch 1, worin das Pfropfpolymerisat ein solches auf der Grundlage von Dien-, EP (D) M-, Acrylat- oder Siliconkautschuken ist

7. Polycarborlat-Zusammensetzung nach Anspruch 6, worin ein Emulsions- oder Masse-ABS oder deren Mischungen als Pfropfpolymerisat enthalten sind.

8. Formkörper, enthaltend eine Polycarbonat-Zusammensetzung nach einem der Ansprüche 1 bis 7.

9. Formkörper nach Anspruch 8 in Form einer Folie, eines Profils, eines Innenausbauteils für ein Schienenfahr-, See-, Luft- oder Kraftfahrzeug, eines Gehäuses von einem einen Kleintransformator enthaltenden Elektrogerät, eines Gehäuses für Geräte zur Informationsverarbeitung und -übermittlung, eines Gehäuses oder einer Verkleidung für medizinisches Gerät, eines Spielfahrzeugs für Kinder, eines flächigen Wandelements, eines Gehäuse für eine einer Sicherheitseinrichtung, eines wärmeisolierten Transportbehältnisses, eines Formteils für Sanitär- und Badausrüstungen, eines Abdeckgitters für Lüfteröffnungen, einer Platte, eines Rohrs, eines Elektroinstallationskanals im Innenausbau und für Außenanwendungen, oder eines Gehäuses für Gartengeräte.

## Claims

1. Impact-resistant modified, flameproofed thermoplastic moulding compositions containing
A) 5 to 95 parts by weight of an aromatic polycarbonate or an aromatic polyester carbonate or a mixture of aromatic polycarbonate and aromatic polyester carbonate,
B) 0.5 to 60 parts by weight of an impact-resistance modifier, in which the impact-resistance modifier comprises one or more graft polymers of
B.1 5 to 95 parts by weight of at least one vinyl monomer containing
B.1.1 50 to 99 parts by weight of vinyl aromatic compounds and/or nuclear-substituted vinyl aromatic compounds and/or methacrylic acid (C₁-C₈) -alkyl esters and
B.1.2 1 to 50 parts by weight of vinyl cyanides and/or (meth) acrylic acid (C₁-C₈)-alkyl esters and/or anhydrides of unsaturated carboxylic acids and/or imides of unsaturated carboxylic acids, on
B.2 95 to 5 parts by weight of one or more grafting bases with glass transition temperatures less than 10°C, a mean particle size (d₅₀ value) of 0.05 to 10 µm, and a gel fraction of the grafting base B.2 of at least 30 wt.%,
C) 0 to 50 parts by weight of one or more thermoplastic vinyl (co)polymers and/or polyalkylene terephthalates,
D) 0.5 to 30 parts by weight of a phosphorus-containing compound of the general formula 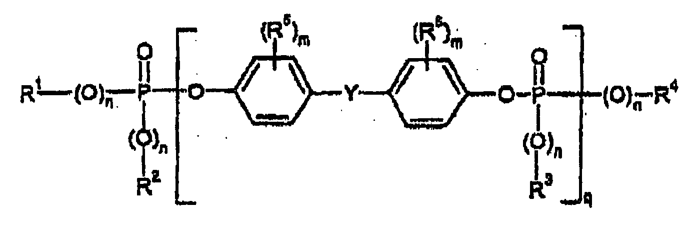 wherein
R¹, R², R³ and R⁴ in each case independently of one another denote C₁ to C₈ alkyl and/or C₅ to C₆ cycloalkyl, C₆ to C₁₀ aryl or C₇ to C₁₂ aralkyl optionally substituted by alkyl,
n independently of one another is 0 or 1,
m independently of one another is 0, 1, 2, 3 or 4,
q is a number between 0.5 and 30,
R⁵ and R⁶ independently of one another denote optionally halogen-substituted C₁ to C₄ alkyl or halogen, and
Y denotes C₁ to C₇-alkylidene, C₁ to C₇₋alkylene, C₅ to C₁₂-cycloalkylene, C₅ to C₁₂-cycloalkylidene, -O-, -S-, -SO-, SO₂ or -CO-,
E) 0 to 5 parts by weight of fluorinated polyolefin,
F) 1 to 30 parts by weight of Wollastonite with a mean aspect ratio of greater than 10 and with a mean particle diameter of less than 15 µm,
G) 0 to 30 wt.% of at least one polymer additive from the group comprising lubricants and mould release agents, nucleating agents, antistatics, stabilisers, glass fibres or carbon fibres, fillers, dyes and/or pigments,
wherein the sum total of the parts by weight of the moulding composition is 100 and the resulting moulding composition has a weld line strength of greater than 6 kJ/m² measured according to ISO 179/1eU.

2. Polycarbonate composition according to claim 1 with a modulus of elasticity of at least 3.5 GPa.

3. Polycarbonate composition according to claim 1 or 2 that meets the flame resistance test according to UL94V with a rating V-0 at wall thicknesses of ≤ 1.5 mm.

4. Polycarbonate composition according to claim 1, wherein the Wollastonite has a mean fibre diameter of less than 10 µm.

5. Polycarbonate composition according to claim 1, wherein the polycarbonate or the polyester carbonate is contained in an amount of 50 to 85 wt.% referred to the mass of the composition.

6. Polycarbonate composition according to claim 1, wherein the graft polymer is based on diene, EP(D)M, acrylate or silicone rubbers.

7. Polycarbonate composition according to claim 6, wherein an emulsion or bulk ABS or mixtures thereof are contained as graft polymer.

8. Moulded body containing a polycarbonate composition according to one of claims 1 to 7.

9. Moulded body according to claim 8 in the form of a film, a profiled section, an internal structural part for a tracked vehicle, marine vehicle, aircraft or motorised vehicle, a housing for electrical equipment containing a small transformer, a housing for equipment for information processing and transmission, a housing or casing for medical equipment, a children's toy vehicle, a two-dimensional wall element, a housing for a safety device, a thermally-insulated transporting container, a moulded part for sanitaryware and bathroom fittings, a cover grating for ventilation openings, a plate, a tube, an electrical installation duct for internal use and for external applications, or a housing for garden tools.

## Revendications

1. Matières à mouler thermoplastiques résilientes, ignifugées, contenant
A) 5 à 95 parties en poids d'un polycarbonate aromatique ou d'un polyester-carbonate aromatique ou d'un mélange d'un polycarbonate aromatique et d'un polyester-carbonate aromatique,
B) 0,5 à 60 parties en poids d'un agent modifiant apportant la résilience, cet agent modifiant consistant en un ou plusieurs polymères greffés de
B.1 5 à 95 d'au moins un monomère vinylique contenant
B.1.1 50 à 99 parties en poids de composés vinylaromatiques et/ou de composés vinylaromatiques substitués dans les noyaux et/ou de méthacrylates d'alkyle en C₁-C₈ et
B.1.2 1 à 50 parties en poids de cyanures de vinyle et/ou de (méth)acrylates d'alkyle en C₁-C₈ et/ou d'anhydrides d'acides carboxyliques insaturés et/ou d'imides d'acides carboxyliques insaturés,
sur
B.2 95 à 5 d'un ou plusieurs supports de greffage ayant des température de transition du second ordre inférieures à 10°C, une dimension de particule moyenne (valeur d₅₀) de 0,05 à 10 µm et une teneur en gel du support de greffage B.2 d'au moins 30 % en poids,
C) 0 à 50 parties en poids d'un ou plusieurs (co)polymères vinyliques et/ou téréphtalates de polyalkylène thermoplastiques,
D) 0,5 à 30 parties en poids d'un composé phosphoré de formule générale 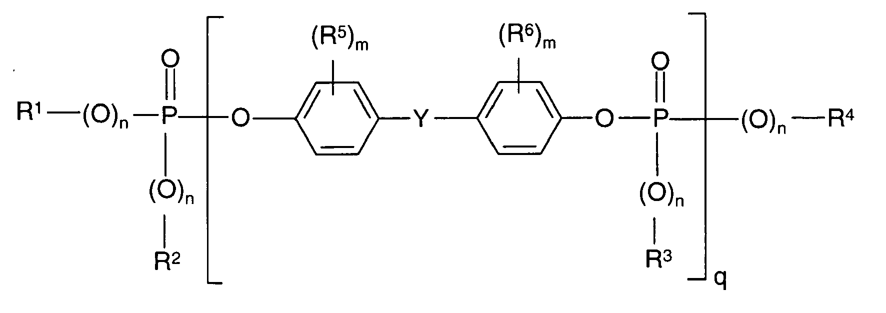 dans laquelle
R¹, R², R³ et R⁴ représentent chacun, indépendamment les uns des autres, un groupe alkyle en C₁-C₈ et/ou un groupe cycloalkyle en C₅-C₈, aryle en C₆-C₁₀ ou aralkyle en C₇-C₁₂ éventuellement substitué par des groupes alkyle,
les indices n sont égaux chacun, indépendamment les uns des autres, à 0 ou 1,
les indices m sont égaux chacun, indépendamment l'un de l'autre, à 0, 1, 2, 3 ou 4,
q est un nombre allant de 0,5 à 30,
R⁵ et R⁶ représentent chacun, indépendamment l'un de l'autre, un groupe alkyle en C₁-C₆ éventuellement substitué par des halogènes, ou un halogène et
Y représente un groupe alkylidène en C₁-C₇, alkylène en C₁-C₇, cycloalkylène en C₅-C₁₂, cycloalkylidène en C₅-C₁₂, -O-, -S-, -SO-, SO₂ ou -CO-,
E) 0 à 5 parties en poids d'une polyoléfine fluorée,
F) 1 à 30 parties en poids d'une wollastonite à un rapport physique moyen supérieur à 10 et un diamètre de fibre moyen inférieur à 15 µm,
G) 0 à 30 % en poids d'au moins un additif pour polymères du groupe des agents lubrifiants, des agents de démoulage, des agents de nucléation, des agents antistatiques, des stabilisants, des fibres de verre ou de carbone, des matières de charge, des colorants et/ou pigments,
la somme des parties en poids de la matière à mouler étant égale à 100 et la matière à mouler obtenue ayant une résistance à la ligne de soudure supérieure à 6 kJ/m², la mesure étant faite conformément à la norme ISO 179/1eU.

2. Composition de polycarbonate selon la revendication 1, à un module d'élasticité d'au moins 3,5 GPa.

3. Composition de polycarbonate selon la revendication 1 ou 2 donnant l'appréciation V-0 à l'essai de résistance aux flammes selon UL 94 V aux épaisseurs de paroi ≤ 1,5 mm.

4. Composition de polycarbonate selon la revendication 1, dans laquelle la wollastonite a un diamètre de fibre moyen inférieur à 10 µm.

5. Composition de polycarbonate selon la revendication 1, dans laquelle le polycarbonate ou polyester-carbonate est contenu en quantité de 50 à 85 % du poids de la composition.

6. Composition de polycarbonate selon la revendication 1, dans laquelle le polymère greffé est un polymère greffé sur un support de caoutchouc diénique, de caoutchouc EP (D) M, de caoutchouc d'acrylate ou de caoutchouc de silicone.

7. Composition de polycarbonate selon la revendication 6, contenant en tant que polymère greffé un polymère ABS préparé en émulsion ou en masse ou un mélange de tels polymères.

8. Objets moulés contenant une composition de polycarbonate selon une des revendications 1 à 7.

9. Objets moulés selon la revendication 8, sous la forme de feuille, de profilé, d'une pièce de construction interne pour véhicules ferroviaires, navire, aéronef ou véhicules poids lourd, d'un logement d'un dispositif électrique contenant un petit transformateur, d'un logement pour dispositifs servant à recueillir et transmettre des données, d'un logement ou d'un vêtement pour application médicinale, d'un véhicule-jouet pour enfant, d'un élément de paroi planiforme, d'un logement pour un dispositif de sécurité, d'un récipient isolant pour transport, d'une pièce moulée pour équipements sanitaires et de salle de bains, d'une grille de protection pour ouverture d'aération, d'une plaque, d'un tube, d'un canal d'installation électrique dans des applications intérieures et extérieures ou d'un logement pour outils de jardin.
